# EUROPÄISCHE PATENTSCHRIFT

(11) **EP 3 703 881 B1**
(45) Veröffentlichungstag und Bekanntmachung des Hinweises auf die Patenterteilung: **05.07.2023**
(21) Anmeldenummer: 18795313.8
(22) Anmeldetag: 15.10.2018
(51) Int. Cl.: B21D 39/03, F16B 5/04

(54) **BAUTEILVERBUND UND STEUERGERÄT**
COMPOSITE COMPONENT AND CONTROL UNIT
ASSEMBLAGE DE PIÈCES ET APPAREIL DE COMMANDE

(30) Priorität: 30.10.2017 DE 102017219410
(43) Veröffentlichungstag der Anmeldung: 09.09.2020
(73) Patentinhaber: Robert Bosch GmbH, 70442 Stuttgart (DE)
(72) Erfinder: BECKBISSINGER, Kai, 70569 Stuttgart (DE); JELICH, Christian, 38102 Braunschweig (DE); BOEHM, Sabine, 71636 Ludwigsburg (DE); UHLAND, Thomas, 74397 Pfaffenhofen-Weiler (DE); LIU, Xiaoyin, Jiangsu Jiangsu 215021 (CN)
(86) Internationale Anmeldenummer: PCT/EP2018/078017
(87) Internationale Veröffentlichungsnummer: WO 2019/086232

(56) Entgegenhaltungen:
- WO-A1-2008/074964
- DE-A1-102012 008 179
- JP-A- S5 881 537
- JP-A- S56 122 632
- JP-A- S62 104 633

## Beschreibung

Die Erfindung betrifft einen Bauteilverbund, ein den Bauteilverbund umfassendes Steuergerät sowie ein Verfahren zur Ausbildung des Bauteilverbundes gemäß den Oberbegriffen der unabhängigen Ansprüche.

### Stand der Technik

Es sind unterschiedliche Verbindungstechniken bekannt, mittels welcher zumindest zwei Bauelemente lösbar oder dauerhaft unlösbar miteinander gefügt bzw. verbunden werden können. Beispielsweise sind sehr häufig Verschraubungslösungen umgesetzt. Ebenso kommen zur Anwendung auch das Verkleben, das Verschweißen, das Verlöten oder das Vernieten der Bauteile. In den genannten Fällen werden allerdings Hilfselemente oder Hilfswerkstoffe benötigt, um einen Bauteilverbund aus den Bauteilen auszubilden. Im Rahmen einer Serienfertigung eines technischen Produktes ist es dagegen vorteilhaft, für eine wirtschaftliche Fertigung auf derartige Hilfselemente oder Hilfswerkstoffe verzichten zu können. Insbesondere bei Bauteilen aus Kunststoff bietet sich hier die Fertigungsmöglichkeit des Heißverstemmens an. Metallische Bauteile wiederrum können beispielsweise durch eine Pressverbindung einen festen Verbund ausbilden. Für metallische Blechbauteile eignet sich auch das Durchsetzfügen nach DIN 8593, bei welchem die Verbindung mittels eines Umformwerkzeuges, insbesondere einem Umformstempel und einer Umformmatrize, erreicht werden kann. Das Durchsetzfügen ist auch unter den Begriffen "Clinchen" oder "Toxen" allgemein in der Fachwelt bekannt. Zur Ausbildung eines Bauteilverbundes werden beispielsweise zwei Bleche durch eine Relativbewegung eines Umformstempels und einer angepassten Umformmatrize in einem Umformbereich durch Kaltumformung ineinander verdrückt. Es sind verschiedene Verfahrensvarianten bekannt, durch welche ein Form- und/oder ein Kraftschluss innerhalb des Umformbereiches erreicht wird. Hierbei erfolgt ein Umformen der Bleche in einem Bereich mit jeweils geschlossenen Blechgrundflächen. Es sind darüber hinaus auch Fertigungsvarianten bekannt, bei welchen ein oberes geschlossenes Blech in eine Vorlochgeometrie eines unteren Bleches eingedrückt wird. Die Umformung zeigt sich unter anderem durch eine Ausstülpung, die auf der Matrizenseite über die Blechgrundfläche absteht. Bei einer Variante des Durchsetzfügens ("Flach-Clinchen") schließt die Ausstülpung mit der unteren Blechgrundfläche eben ab. Zur Ausbildung einer festen Verbindung, die auch bei einer späteren Kraftbeaufschlagung im Umformbereich ein Lösen des Verbundes verhindert, ist es bisher erforderlich, mittels eines Umformstempels gleiche Bleche oder alternativ ein weiches Blech (vergleichsweise geringere Streckgrenze Rp0,2) in ein festes Blech (vergleichsweise höhere Streckgrenze Rp0,2) einzudrücken. Dadurch ist aber eine Werkstoffauswahl für die zu verbindenden Bauteile beschränkt, so dass bestimmte technische Produktanwendungen mit abweichenden Werkstoffpaarungen für das Durchsetzfügen nicht geeignet sind. Alternativ muss von der bisherigen optimaten Werkstoffpaarung abgewichen werden, um die Prozessanforderung zum Ausbilden eines Bauteilverbundes durch ein Durchsetzfügen zu erfüllen. Ebenso Prozessbedingt sind die Blechstärken bevorzugt gleich groß gewählt bzw. zur Reduzierung von Stempelkräften ist das dem Umformstempel zugewandte weichere Blech dünner ausgeführt, als das der Umformmatrize zugewandte festere Blech. Insgesamt werden allerdings weiterhin hohe Umformkräfte für das Umformwerkzeug oftmals von nicht weniger als 100 KN oder mehr benötigt. Folglich sind der Umformstempel und die Umformmatrize entsprechend groß dimensioniert, so dass bei Produktanwendungen, die nur einen begrenzten Platz für das Umformwerkzeug im vorgesehenen Umformbereich bieten, von einer Verbindungsausbildung durch Durchsetzfügen ausgeschlossen sind.

Aus der Offenlegungsschrift JPS56122632 A, auf welche der Oberbegriff der Ansprüche 1 und 12 basiert, ist eine Verbundanordnung aus zwei gefügten Blechen mittels eines Umformwerkzeuges bekannt. Die Bleche weisen eine unterschiedliche Festigkeit auf. Das festere Blech wird hierbei in das weniger feste Blech mittels eines Werkzeuges eingedrückt, derart, dass dort in diesem eine Aussparung durch ein Abscheren ausgebildet wird. Das Material des festeren Bleches durchdringt die Aussparung und umgreift diese randseitig auf der anderen Seite.

Aus den Offenlegungsschriften JPS62104633 A und JPS5881537 A ist jeweils ebenfalls eine Verbundanordnung aus zwei gefügten Blechen mittels eines Umformwerkzeuges bekannt. Eines der Bleche weist dabei eine Aussparung auf, in welche mittels eines stiftförmigen Umformwerkzeuges Material des anderen Bleches mit einer Hinterschneidung eingedrückt wird.

### Offenbarung der Erfindung

### Vorteile

Der Erfindung liegt die Aufgabe zu Grunde, einen Bauteilverbund mittels Durchsetzfügen auszubilden unter Verwendung optimierter Werkstoffpaarungen der zu verbindenden Bauteile und/oder aufgrund verringerter Umformkräfte ein Durchsetzfügen bei begrenzten Platzverhältnisses im Fügebereich durch kleinere Umformwerkzeuge zu ermöglichen. Auf diese Weise können Produktanwendungen wirtschaftlich erschlossen werden, die von bisher bekannten Durchsetzfügeverfahren ausgeschlossen waren.

Diese Aufgabe wird durch einen Bauteilverbund, ein Steuergerät sowie ein Verfahren zur Ausbildung des Bauteilverbundes mit den kennzeichnenden Merkmalen der unabhängigen Ansprüche gelöst.

Ausgegangen wird von einem Bauteileverbund, umfassend zumindest ein erstes und ein zweites Bauteil, welche in einem Fügebereich miteinander verbunden sind, wobei der Fügebereich einen plastischen Umformbereich aufweist mittels welchem das erste und das zweite Bauteil durch eine Kaltverformung mit einer zueinander gerichteten Haltekraft im Fügebereich gehalten sind. In dem plastischen Umformbereich weist das erste Bauteil eine Ausnehmung auf, die zumindest teilweise durch verformtes Material des zweiten Bauteils ausgefüllt ist. Durch das verformte Material ist dabei eine vom zweiten Bauteil abstehende Ausstülpung ausgebildet, welche in die Ausnehmung hineinragt und einen Kontaktbereich zwischen dem ersten und dem zweiten Bauteil mit einer Hinterschneidung ausbildet. Die Hinterschneidung wirkt bei einer Kraftbeaufschlagung auf den Fügebereich einem Lösen der Bauteile entgegen. Der Umformbereich ist durch ein Durchsetzfügen mittels eines Umformwerkzeugs kalt umgeformt. Das Grundmaterial des die Ausnehmung aufweisenden ersten Bauteils weist dabei eine geringere Streckgrenze auf als das Grundmaterial des die Ausnehmung durch verformtes Material zumindest teilweise ausfüllenden zweiten Bauteils. Ferner sind das erste und das zweite Bauteil zumindest in dem Fügebereich als Blechteile oder blechartige Teile ausgebildet, wobei eine Grundblechstärke des zweiten Bauteiles größer ist als eine Grundblechstärke des ersten Bauteils. Der Begriff Grundmaterial bezeichnet einen Materialzustand des ersten und des zweiten Bauteils ohne einer Verfestigung aufgrund einer Kaltumformung durch ein Durchsetzfügen. Das Grundmaterial weist daher einen solchen Materialzustand auf, welcher zeitlich noch bis vor einer erfolgten Kaltumformung im plastischen Umformbereich vorliegt. Des Weiteren liegt das Grundmaterial in einem solchen Materialzustand in einem Bauteilbereich im Fügebereich vor, welcher außerhalb des plastischen Umformbereiches angeordnet ist. Im Umformbereich dagegen weist ein verformtes Material des ersten und/oder des zweiten Bauteiles ein gegenüber dem Grundmaterial durch die Kaltumformung verfestigten Materialzustand auf. In ähnlicher Weise bezeichnet der Begriff Grundblechstärke die Materialdicke der Bauteile vor einer Kaltumformung und/oder die Materialdicke der Bauteile außerhalb des Umformbereiches. Blechteile bzw. blechartige Teile bezeichnen Teile, die eine lateralen Erstreckung der Bauteile zumindest innerhalb des Fügebereiches aufweisen, die ein Vielfaches der dort vorliegenden Materialdicke entspricht, beispielsweise mehr als das 5-fache der Materialdicke, bevorzugt mehr als das 10-fache, insbesondere mehr als das 20-fache. In der Regel weisen Blechteile eine konstante Blechstärke auf. Bei blechartigen Teilen ist eine lokale Variation der Blechstärke möglich, ohne dabei von dem Charakter eines Blechteiles abzuweichen. Derartige Variationen der Blechstärke können beispielsweise durch geringfügig gewölbte oder geringfügig schrägverlaufende Flächen vorliegen, die insbesondere fertigungsbedingt und/oder funktionsbedingt vorgesehen werden müssen, beispielsweise Entformschrägen oder Verrundungen. Insofern können Tiefziehteile, entsprechend geformte Spritzgussteile oder Strangpressteile mit im Fügebereich vorliegender oben beschriebener Charakteristik als blechartige Teile bezeichnet werden.

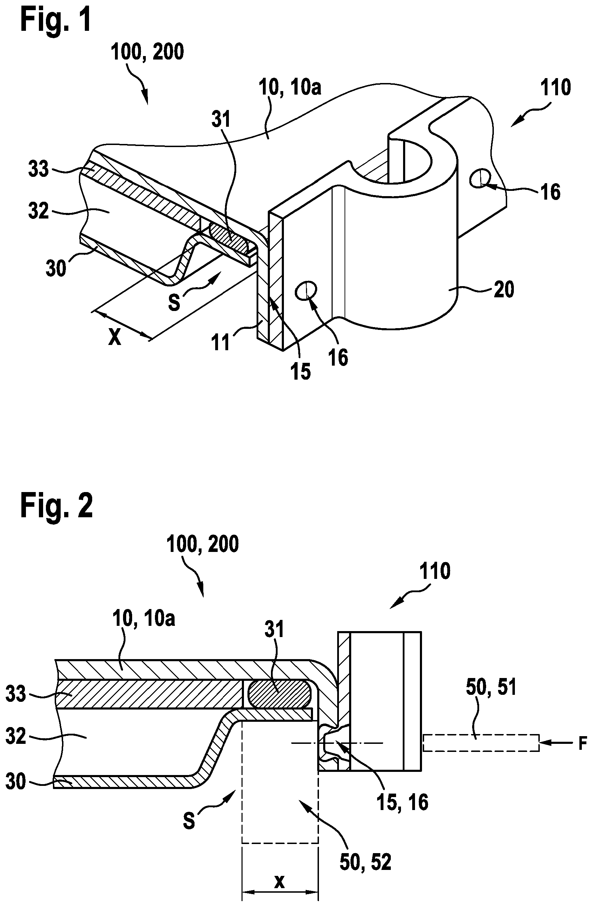

Entgegen bisheriger Umsetzlösungen zur Ausbildung eines Bauteilverbundes mittels eines Durchsetzfügens ist der Umformbereich nunmehr unerwartet dadurch ausgebildet, dass die Kaltumformung als Abformung gegenüber einem Umformwerkzeug aufgrund einer verdrehten Anordnung von Umformmatrize und Umformstempel in Bezug zu den Bauteilen ausgebildet ist. So ist nämlich das erste die Ausnehmung aufweisende Bauteil mit dem weicheren Grundmaterial und der geringeren Blechgrundstärke für die Kaltumformung einer Umformmatrize zugewandt ist. Dagegen ist das zweite Bauteil mit dem festeren Grundmaterial und der größeren Blechgrundstärke einem zugehörigen Umformstempel zugewandt und die Ausstülpung durch verformtes Material des zweiten Bauteiles in Richtung der Umformmatrize und somit in Richtung des ersten Bauteiles ausgebildet. Es hat sich überraschender Weise bei einem solchen Bauteilverbund gezeigt, dass die Verbundausbildung mit sehr geringen Umformkräften ausgebildet werden kann. Vorteilhaft können damit die für die Ausbildung dann erforderlichen Umformwerkzeuge zu bisherigen Umformwerkzeugen verhältnismäßig klein gehalten werden. Dadurch ist es ermöglicht beispielsweise eine Umformmatrize an unzugänglichen Fügebereichen zweier Bauteile anzuordnen, beispielsweise in Spaltöffnungen, die durch nah angrenzende Bauteilflächen begrenzt sind. Derartige begrenzte Spaltöffnungen findet man beispielweise an Produkten, bei denen ein Flanschbereich in einen Abstand zu dem restlichen Grundkörper umgebogen ist, und der Flanschbereich als Befestigung mit einem weiteren Bauteil verbunden werden soll. Ein solcher Bauteilverbund zeigt sich beispielsweise in Fig. 1 als Teil eines Steuergerätes. Eines der Bauteile (Gehäusedeckel) ist dabei als Metalltiefziehteil gefertigt. Das Metalltiefziehteil umfasst eine Vielzahl von Funktionsbereichen auf, beispielsweise Versteifungsrippen, Dichtkonturen, Entwärmungsstege, Befestigungsdome und andere und bedingt aus diesem Grund eine sehr komplexe Tiefziehform. Um überhaupt einen Tiefziehprozess zu ermöglichen, ist es erforderlich, ein weiches Material, insbesondere AlMg3, vorzusehen. Ferner ist als das für den Bauteilverbund vorgesehene weitere Bauteil ein Halteelement, welches dagegen robust auszulegen ist, um bei einer Befestigung des Steuergerätes an einem ortfesten Halteort, beispielsweise im Motorraum eines Kraftfahrzeuges oder anderswo, und im Betrieb den dort auftretenden Belastungen ohne Verformung widerstehen zu können. Das Haltelement kann deswegen insbesondere aus AlMgSi0,5 vorgesehen sein.

Trotz der ungünstigen Ausgangsbedingungen mit beengten Platzverhältnissen im Fügebereich und der bisher für ein Durchsetzfügen als nicht geeignet betrachteten Konstellation einer Werkstoffpaarung und Dickenpaarung gegenüber einer Umformrichtung ist vorteilhaft die Ausbildung des zuvor genannten Steuergerätes nunmehr ermöglicht. Dabei kann die für das Steuergerät und dessen Betrieb optimierte Werkstoffauswahl und Bauteilstärke unverändert beibehalten werden. Neben einem Gehäuse als Metalltiefziehteil ist in gleicher Weise auch ein Steuergerät als ein solcher Bauteilverbund ermöglicht, in welchem das Gehäuse als Blechgehäuse oder als Metallspritzgussteil ausgebildet ist.

Durch die in den abhängigen Ansprüchen aufgeführten Maßnahmen sind vorteilhafte Weiterbildungen und Verbesserungen des erfindungsgemäßen Bauteilverbundes möglich.

In einer bevorzugten Ausführungsform des Bauteilverbundes beträgt die Streckgrenze des Grundmateriales des zweiten Bauteiles 160 MPa - 250 MPa und beträgt die Streckgrenze des Grundmateriales des ersten Bauteiles 120 MPa bis maximal der um 20 MPa verringerten Streckgrenze des zweiten Bauteiles. In vorteilhafter Weise konnte hierbei festgestellt werden, dass dadurch wider Erwarten eine belastungsfeste Verzahnung des festeren verformten Materials mit dem weicheren verformten Materials erwirkt werden kann. Zudem ergibt sich in Abstimmung mit der Stempel- und Matrizenform damit ein günstiges Verhältnis der Materialeigenschaften für eine Fließbewegung der verformten Materialien derart, dass eine Hinterschneidung zwischen den verformten Materialien des ersten und zweiten Bauteils zustande kommt. Eine höhere Streckgrenze des Grundmateriales des zweiten Bauteiles erhöht dagegen die Neigung einer Rissbildung in dem Umformbereich. Eine Rissneigung zeigt sich auch bei einem ungünstigen Verhältnis der Streckgrenzen der Grundmaterialien beider Bauteile zueinander. Vorteilhaft ist die Rissneigung dann verringert, wenn sich die Streckgrenzen der Grundmaterialien beider Bauteile zueinander nur um einen Betrag von 20 - 120 MPa unterscheiden.

Bei einer besonders vorteilhaften Ausführungsform beträgt die Grundblechstärke des ersten Bauteiles 1,8 mm - 3,2 mm, bevorzugt 2,5 mm, und die Grundblechstärke des zweiten Bauteiles 1,0 mm - 1,8 mm, bevorzugt 1,4 mm.

Insgesamt kann insbesondere im Bereich der Fertigung von Steuergeräten durch die genannten Grundblechstärken ein gutes Verhältnis von mechanischer Belastbarkeit einerseits und dem Einhalten wirtschaftlicher Fertigungskosten andererseits erreicht werden. Bevorzugt sind hierfür das Grundmaterial des ersten Bauteiles aus AIMg3 und das Grundmaterial des zweiten Bauteils aus ALMgSi0,5 gewählt. Grundsätzlich sind auch Materialien aus anderen metallischen Werkstoffen auswählbar, die nicht zu spröde sind, d.h. plastisch verformbar sind. Daher gilt für eine geeignete Auswahl zu beachten, dass dann optional das Grundmaterial des ersten Bauteiles (da nur geringe Kaltumformung erfolgt) und insbesondere des zweiten Bauteiles (da eine sehr starke Kaltumformung erfolgt) ein Verhältnis ihrer jeweiligen Streckgrenze zu ihrer jeweiligen Zugfestigkeit von <=0,9 und eine jeweilige Bruchdehnung von >=8% aufweisen.

In einer vorteilhaften Weiterbildung des Bauteilverbundes sind die Ausnehmung und die Ausstülpung zu einer gemeinsamen Mittelachse ausgerichtet. Ferner weist die Ausnehmung eine Rundlochgeometrie auf, wobei zur Ausbildung der Hinterschneidung ein jeweiliger Querschnittsdurchmesser der Ausnehmung und der Ausstülpung senkrecht zur Mittelachse über zumindest einen Abschnitt des Kontaktbereiches hinweg in einer zum zweiten Bauteil abgewandten Richtung zunehmend vergrößert ist. Eine Ausrichtung deckt hierbei auch einen Versatz von bis zu 0,7 mm, bevorzugt bis zu 0,5 mm, von dann versetzt zueinander liegenden Mittelachsen der Ausnehmung und der Ausstülpung ab, was insbesondere fertigungstechnisch bedingt sein kann. Insgesamt bleibt dadurch ein Formschluss durch Ausbildung einer Hinterschneidung weiterhin sichergestellt. Fertigungsbedingt weist das zweite Bauteil im plastischen Umformbereich grundsätzlich eine Vertiefung mit kreisförmigen Innenquerschnitten als Abdruck eines zur Verformung des Materials in die Ausnehmung verwendeten Umformstempels auf, wobei die Vertiefung bis in die Ausnehmung reicht und einen Bodengrund der Ausstülpung ausbildet. Erfindungsgemäß ist dabei vom Bodengrund aus von einem ersten sich aufweitenden kegelstumpfförmigen Abschnitt der Vertiefung bis oberhalb der Ausnehmung über einen Stufenabsatz ein zweiter sich aufweitender kegelförmiger Abschnitt der Vertiefung ausgebildet. Durch den Stufenabsatz kann bei einer Verbundausbildung mittels eines Umformwerkzeuges eine Rißbildung insbesondere im Kontaktbereich zwischen dem Umformstempel und dem zweiten Bauteil vermieden werden. Vorteilhaft wird Material des zweiten Bauteiles durch den Stufenabsatz nachgedrückt, noch bevor eine zu hohe Zugspannung in dem genannten Kontaktbereich entsteht. Dabei haben sich für eine günstige Stempelgeometrie, welche sich auch in der abgedruckten Vertiefung zeigt, nachfolgende Geometrieangaben als vorteilhaft gezeigt. Bevorzugt weist der erste kegelstumpfförmige Abschnitt einen kleinsten Querschnittsdurchmesser von 2,2 mm -3,6 mm auf und der zweite kegelstumpfförmige Abschnitt weist einen kleinsten Querschnittsdurchmesser von 3,2 mm - 4,5 mm auf, wobei immer gilt, dass D2 > D1. Je größer der Querschnittsdurchmesser des ersten kegelstumpfförmigen Abschnittes gewählt ist, umso besser bildet sich eine Verzahnung aus. Allerdings wächst die dann für die Umformung erforderliche Umformkraft an. Ferner bevorzugt weist der erste kegelstumpfförmige Abschnitt einen Öffnungswinkel von 1° - 20°, bevorzugt von 4° - 11°, und der zweite kegelstumpfförmige Abschnitt einen Öffnungswinkel von 1° - 20°, bevorzugt von 7° - 11°, auf. Mit geringerem Öffnungswinkel des ersten kegelstumpfförmigen Abschnittes lässt sich ebenfalls die Verzahnung vergrößern, allerdings kann sich bei ungünstiger Konstellation von die Umformung beeinflussenden Prozessgrößen eine Rissneigung vergrößern, so dass eine Feinabstimmung der Prozessgrößen ggf. erforderlich ist. Der Einfluss des Öffnungswinkels des zweiten kegelstumpfförmigen Abschnitts ist für die Qualität der Verbundsausbildung gering und hat lediglich fertigungstechnische Bedeutung. Je größer er ausgeführt ist, desto höher zeigt sich eine erforderliche Umformkraft bei der Kaltumformung. Gleichzeitig ist das Ablösen eines Umformstempels aus dem fertig kaltumgeformten Bauteilverbundes erleichtert. Des Weiteren bevorzugt ist der Stufenabsatz 1,35 mm - 3 mm oberhalb des Bodengrundes der Ausstülpung ausgebildet. Dieser ist bevorzugt in Abstimmung mit der Vorlochgeometrie des ersten Bauteiles auszuwählen, jener Geometrie der Lochgeometrie, die das erste Bauteil vor einer Kaltumformung durch ein Durchsetzfügen aufweist. Für die Abstimmung ist hierbei insbesondere das Verhältnis des kleinsten Querschnittsdurchmessers des ersten kegelstumpfförmigen Abschnittes zum Lochkreisdurchmesser der Vorloch-Geometrie zu berücksichtigen. Grundsätzlich gilt, wenn der Querschnittsdurchmesser des ersten kegelstumpfförmigen Abschnittes größer und der Lochdurchmesser der Vorlochgeometrie kleiner wird, verbessert das die Verzahnung für die Ausbildung einer Hinterschneidung. Gleichzeitig erhöht sich aber auch die erforderliche Umformkraft sowie die Möglichkeit einer Rissausbildung. Hierbei ist daher darauf zu achten, dass bei einer optimalen Abstimmung der dann bestimmte Stufenabsatz rechtzeitig und spürbar in das durch den ersten kegelstumpfförmigen Abschnitt des Umformwerkzeuges vorverformte Material eintaucht, gerade noch bevor eine Rissbildung erfolgen kann. Eine gleiche Wirkung zeigt sich auch bei Vorsehen eines Radius am Kantenrand des Umformstempels welcher als Verrundung im Bodengrund der Vertiefung erkennbar ist, nämlich je kleiner der Radius gewählt ist. Vorteilhaft ist daher ein Radius von 0,1 mm - 1,0 mm vorzusehen, bevorzugt von 0,1 mm - 0,5, beispielsweise 0,3 mm. Ferner hat sich gezeigt, dass die Möglichkeit zur Rissbildung zusätzlich verringert wird, wenn bei der Vorlochgeometrie die dem zweiten Bauteil zugewandte Lochkreiskante einen Radius aufweist, bevorzugt bis zu 0,6 mm. Dadurch kann vermieden werden, dass während einer Kaltumformung durch ein Duchsetzfügen verformtes Material an der genannten Lochkreiskante abgeschert wird. Zusätzlich lässt sich eine verbesserte Verzahnung zur Ausbildung der Hinterschneidung erreichen, indem bei der Vorlochgeometrie die dem zweiten Bauteil abgewandte Lochkreiskante eine Fase aufweist und diese umso größer gewählt ist. Ebenso lässt sich die Verzahnung dadurch verbessern, je geringer die Bodendicke im Bodengrund der im Bauteilverbund vorliegenden Ausstülpung ausgebildet wird. Dies lässt sich beispielsweise durch eine entsprechende Zustellung des Umformweges für den Umformstempel erreichen, wobei hierbei mit erhöhten Umformkräften zu rechnen ist.

In einer weiteren vorteilhaften Ausführungsform des Bauteilverbundes weist die Ausnehmung im ersten Bauteil eine dem zweiten Bauteil zugewandte Eintrittsquerschnittsfläche und eine dem zweiten Bauteil abgewandte Austrittsquerschnittsfläche auf, wobei die Ausstülpung eben mit der Austrittquerschnittsfläche abschließt oder diese bis zu 0,5 mm, bevorzugt um 0,3 mm, überragt. Ein ebener oder ein die Austrittsquerschnittsfläche überragender Bereich der Ausstülpung ergibt sich als Abdruck einer zur Verformung des Materials in die Ausnehmung verwendeten Matrizenform. Ein durch eine Vertiefung in der Umformmatrize abgeformter überragender Bereich ist weitestgehend zylinderförmig und über einen Stufenabsatz zu einem mit der Austrittsquerschnittsfläche eben abschließenden Bereich der Ausstülpung ausgebildet. Bevorzugt weist dabei der überragende Bereich der Ausstülpung zu Beginn des Stufenabsatzes einen Querschnittsdurchmesser von 4,8 - 5,1 mm auf. Damit ein Ablösen der Umformmatrize von dem ausgebildeten Bauteilverbund erleichtert ist, kann der Stufenabsatz zudem verrundet sein und die zylinderförmigen Außenflächen des überragenden Bereiches konisch zulaufen. Grundsätzlich kann eine Vertiefung in der Matrize - und somit das Abformen eines überragenden Bereiches - in oben genannter Größenordnung eine Verzahnung im Bauteilverbund erhöhen, wogegen eine eben ausgeführte Matrizenform die Gefahr einer Rissausbildung deutlich verringert.

Die Erfindung führt auch zu einem Steuergerät, umfassend einen Bauteilverbund nach zumindest einer der zuvor beschriebenen Ausführungsformen. Hierbei ist das erste Bauteil ein Metallgehäuse des Steuergerätes, insbesondere ein Blechgehäuse, ein Gehäuse als Metalltiefziehteil oder ein Gehäuse als Metallspritzgussteil. Das zweite Bauteil ist dagegen ein mit dem Metallgehäuse verbundenes Halteelement zur Befestigung des Steuergerätes an einen ortfesten Halteort, insbesondere innerhalb eines Kraftfahrzeuges, beispielsweise im Motorraum des Kraftfahrzeuges. Grundsätzlich sind beide Bauteile zumindest im Fügebereich als Blechteile und/oder blechartige Teile ausgebildet, wobei zum Verständnis von blechartigen Teilen auf die Ausführung der vorausgegangenen Beschreibung verwiesen wird.

Des Weiteren führt die Erfindung auch zu einem Verfahren zum Ausbilden eines Bauteilverbundes nach einer der zuvor beschriebenen Ausführungsformen, durch Verbinden zumindest eines ersten und eines zweiten Bauteiles mittels Durchsetzfügens mit den Verfahrensschritten:
- das erste und das zweite Bauteil werden in einem Fügebereich in Überdeckung gebracht, wobei das erste Bauteil eine Ausnehmung, insbesondere mit einer Lochgeometrie, aufweist und das Grundmaterial des ersten Bauteiles eine geringere Streckgrenze aufweist als das Grundmaterial des zweiten Bauteiles, und eine Materialstärke des zweiten Bauteiles zumindest im Fügebereich größer ist als die Materialstärke des ersten Bauteiles im Fügebereich,
- das erste Bauteil wird im Bereich der Ausnehmung in Anlagenkontakt mit einer Umformmatrize eines Umformwerkzeuges und das im Bereich der Ausnehmung angeordnete zweite Bauteil wird in Wirkverbindung mit einem Umformstempel des Umformwerkzeuges gebracht,
- der Umformstempel wird in Richtung des zweiten Bauteiles bewegt, wodurch festeres Material des zweiten Bauteiles in die Ausnehmung des weicheren ersten Bauteiles verdrängt wird und eine vom zweiten Bauteil abstehende Ausstülpung ausgebildet wird, welche in die Ausnehmung hineinragt und aufgrund der Kaltumformung durch Fließbewegungen des festeren Grundmaterials des zweiten Bauteils und des weicheren Grundmaterials des ersten Bauteils ein Kontaktbereich zwischen dem ersten und dem zweiten Bauteil mit einer Hinterschneidung ausgebildet wird, welche bei einer Kraftbeaufschlagung auf den Fügebereich einem Lösen des ersten und des zweiten Bauteiles entgegenwirkt.

Das weichere Material bezieht sich hierbei auf eine geringere Streckgrenze des Grundmaterials des ersten Bauteiles im Vergleich zu einer höheren Streckgrenze des zweiten Bauteils, welches dann demgegenüber als festeres Material vorliegt. Durch das beschriebene Verfahren kann als Bauteilverbund auch das zuvor beschriebene Steuergerät ausgebildet werden.

In einer bevorzugten Ausführungsform des Verfahrens sind das erste und das zweite Bauteil zumindest in dem Fügebereich als Blechteile oder blechartige Teile ausgebildet. Ferner weist die Ausnehmung im ersten Bauteil eine Lochgeometrie auf, welche vor einer Kaltumformung durch das Umformwerkzeug als Vorlochgeometrie einen zylindrischen Innenflächenabschnitt mit einem Kreisdurchmesser von 3,2 - 5,5 mm umfasst und auf einer der Umformmatrize zugewandten Blechaußenfläche des ersten Bauteiles eine Anfasung ausgebildet ist, welche unter einem Winkel von 25° - 60° zur Mittelachse der Ausnehmung in Abhängigkeit der Blechgrundstärke des ersten Bauteiles in einem Abstand von 0,3 - 1,35 mm zur Blechaußenfläche auf den zylindrischen Innenflächenabschnitt ausläuft. Insbesondere in Kombination mit den zuvor genannten Geometriedaten eines Umformstempels und einer Umformmatrize sowie den Geometriedaten und Materialangaben zu dem ersten und dem zweiten Bauteil lässt sich ein Bauteilverbund ausbilden, welcher eine mit bisherigen Verfahren mit jedoch anderen Werkstoffpaarungen und Dickenpaarungen in Bezug auf eine Umformrichtung vergleichbare Verbindungsfestigkeit aufweist. Vorteilhaft erfordert das beschriebene Verfahren nur geringe Umformkräfte. Insofern ist vorteilhaft, dass der Bauteilverbund mit einer Umformkraft des Umformwerkzeuges von zwischen 10 - 30 KN, insbesondere zwischen 12 - 20 KN, ausgebildet wird. Durch die geringen Umformkräfte kann das Umformwerkzeug deutlich kleiner dimensioniert werden. Dadurch können neue Anwendungsfelder erschlossen werden, insbesondere dort, wo aufgrund begrenzter Platzverhältnisse in einem vorgesehenen Fügebereich ein Anordnen eines bisherigen großen Umformwerkzeuges nicht möglich ist.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnung. Diese zeigt in:
- Fig. 1:: ein Befestigungsbereich eines Steuergerätes in einer perspektivischen Darstellung,
- Fig. 2:: den Befestigungsbereich aus Fig. 1 in einer seitlichen Schnittdarstellung,
- Fig. 3:: eine Anordnung zur Ausbildung eines Bauteilverbundes in einer seitlichen teilweisen Schnittdarstellung,
- Fig. 4a:: ein Schliffbild eines ersten Umformbereiches innerhalb eines Fügebereiches eines ersten und eines zweiten Bauteiles, welche durch ein erfindungsgemäßes Verfahren zu einem Bauteilverbund verbunden sind,
- Fig. 4b:: eine schematische Darstellung des Schliffbildes aus Fig. 4a in einer seitlichen Schnittdarstellung,
- Fig. 5a:: ein Schliffbild eines anderen Umformbereiches innerhalb eines Fügebereiches eines ersten und eines zweiten Bauteiles, welche durch ein erfindungsgemäßes Verfahren zu einem Bauteilverbund verbunden sind,
- Fig. 5b:: eine schematische Darstellung des Schliffbildes aus Fig. 5a in einer seitlichen Schnittdarstellung,
- Fig. 6:: schematisch einen Umformbereich in einer Schnittdarstellung mit Darstellung eines verdrängten Materialvolumens,
- Fig. 7:: ein real aufgenommenes Kraft-Weg-Diagramm bei der Ausbildung eines Bauteilverbundes.

### Ausführungsformen der Erfindung

In den Figuren sind funktional gleiche Bauelemente jeweils mit gleichen Bezugszeichen gekennzeichnet.

In der Fig. 1 ist ein Befestigungsbereich 110 eines Steuergerätes 200 in einer perspektivischen Darstellung gezeigt. Das Steuergerät 200 umfasst hierbei einen Bauteilverbund 100, welcher als ein erstes Bauteil 10 ein metallisches Gehäuseteil und als ein zweites Bauteil 20 ein Halteelement umfasst zur Befestigung des Steuergerätes 200 an einen ortsfesten Halteort, beispielsweise in einem Motorraum eines Kraftfahrzeuges. Das metallische Gehäuseteil ist im vorliegenden Beispiel ein Gehäusedeckel 10, welcher beispielsweise als Metallziehtiefteil gefertigt ist. Aufgrund von Anforderungen aus einem Tiefziehprozess ist der Gehäusedeckel 10 aus einem weichen Material, beispielsweise aus AIMg3. Alternativ ist der Gehäusedeckel 10 als Blechgehäuse oder als Metallspritzgussteil gefertigt. Das Steuergerät 200 umfasst auch einen Gehäuseboden 30, welcher mit dem Gehäusedeckel 10 über eine seitliche Dichtung 31 verschlossen ist und einen mediendichten Hohlraum 32 umschließt. Im Inneren des Hohlraumes 32 ist eine Elektronikeinheit 33, beispielsweise ein Schaltungsträger mit einer elektronischen Schaltung, angeordnet. Der Schaltungsträger 33 ist beispielsweise zwischen dem Gehäusedeckel 10 und dem Gehäuseboden 30 klemmend aufgenommen. In einem Seitenbereich des Steuergerätes 200 weist der Gehäusedeckel 10 einen Flansch 11 auf, welcher von einer Gehäusedeckeloberseite 10a in Richtung des Gehäusebodens 30 umgebogen ist, beispielsweise in einem Winkel von 90°. Zwischen dem Flansch 11 und dem Gehäuseboden 30 liegt somit eine Spaltöffnung S vor. Das Halteelement 20 ist mittels eines noch nachfolgend erläuterten Verfahrens mit dem Flansch 11 des Gehäusedeckels 10 durch eine Kaltumformung verbunden. Hierbei liegt ein Fügebereich 15 in ebenen Flächenbereichen des Haltelementes 20 und des Gehäusedeckels 10 vor, wobei beide Bauteile 10, 20 über diese Flächenbereiche aufeinander aufliegen. Im Fügebereich 15 ist zumindest ein plastischer Umformbereich 16 ausgebildet, mittels welchem das Halteelement 20 und der Gehäusedeckel 10 durch eine Kaltverformung mit einer zueinander gerichteten Haltekraft im Fügebereich 15 gehalten sind. Der plastische Umformbereich 16 ist durch ein Umformwerkzeug 50 eingebracht, insbesondere durch einen Umformstempel 51 und eine Umformmatrize 52.

In der Fig. 2 ist der Befestigungsbereich 110 in einer seitlichen Schnittdarstellung gezeigt, wobei auch ein bereits ausgebildeter Umformbereich 16 sichtbar ist. Zu sehen ist ferner, dass der Fügebereich 15 auf Höhe der Spaltöffnung S angeordnet ist. Daher ist es erforderlich, dass das Umformwerkzeug 50 innerhalb der Spaltöffnung S platziert werden muss. Bei sehr beengten Platzverhältnissen kann jedoch allein die Anordnung der Umformmatrize 52 innerhalb des Spaltöffnung S in Frage kommen, da diese im Vergleich zum Umformstempel 51 in der Umformrichtung nur kleine Wege zurücklegt oder als Amboss in der Umformrichtung ganz ortsfest gehalten wird. Vorteilhaft wird der Umformbereich 16 mit einer geringen Umformkraft F ausgebildet. Für diesen Fall kann dann eine erforderliche Umformmatrize 52 klein dimensioniert werden. Bei einer seitlichen Einführung der Umformmatrize 52 in Richtung der Gehäusedeckeloberseite 10a zur Anordnung innerhalb der Spaltöffnung S ist eine Dimensionierung der Matrizentiefe in Umformrichtung nur maximal bis zu einem Spaltmaß x ermöglicht, welches den kleinsten Abstand zwischen dem Flansch 11 und dem Gehäuseboden 30 innerhalb der Spaltöffnung S definiert. Die Matrizentiefe ist weiterhin entsprechend reduziert, wenn Aushubwege der Umformmatrize noch zu berücksichtigen sind. Zum Erhalt eines betriebssicheren Befestigungsbereiches, ist das Halteelement aus einem festen Material gewählt, beispielsweise aus AlMgSi0,5. Auf diese Weise kann davon ausgegangen werden, dass das Halteelement 20 die bei einer Montage des Steuergerätes an einen ortsfesten Halteort und die im Betrieb auf das Halteelement 20 einwirkenden Kräfte ohne Verformung und/oder Beschädigung aufnehmen kann. Das Halteelement 20 ist beispielsweise als Strangpressteil, als Blechteil oder als Metallspritzgussteil gebildet und ist zumindest im Fügebereich 15 ebenso wie der Gehäusedeckel 10 blechartig ausgeformt.

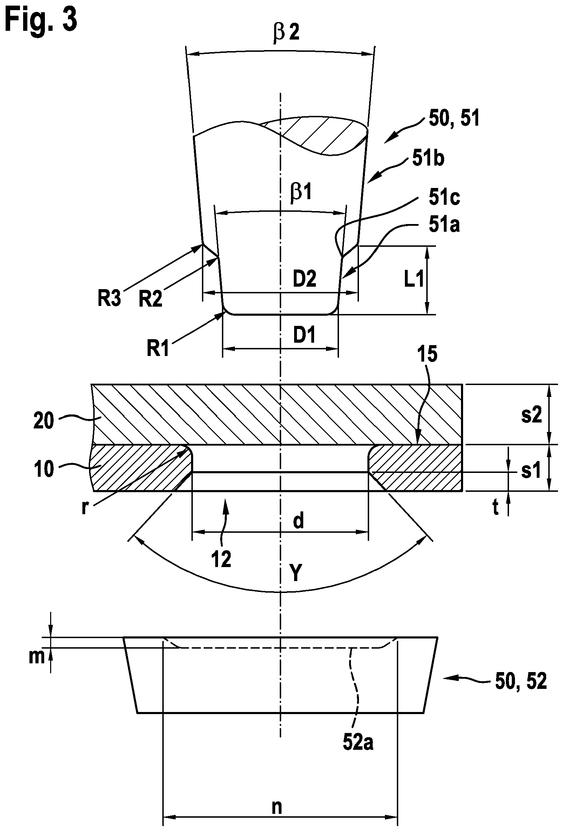

Die Anordnung des Umformwerkzeuges 50 zusammen mit dem Gehäusedeckel 10 und dem Halteelement 20 ist in der Fig. 3 schematisch nochmals dargestellt. Zur besseren Darstellung der dort abgebildeten Geometriedaten ist der Umformstempel 51 und die Umformmatrize 52 gegenüber dem Gehäusedeckel 10 und dem Halteelement 20 beabstandet gezeigt. Außerdem sind im Gegensatz zur Darstellung in Fig. 2 der Gehäusedeckel 10 und das Halteelement 20 in einem Zustand noch vor einer Kaltumformung durch das Umformwerkzeug 50. Ferner weist im Fügebereich 15 zu diesem Zeitpunkt aufgrund der genannten Materialauswahl das Halteelement 20 eine höhere Streckgrenze auf, als der Gehäusedeckel 10. Darüber hinaus liegt das Halteelement 20 im Fügebereich mit einer Grundblechstärke s2 von beispielsweise 2,5 mm vor und ist stärker ausgeführt als der Gehäusedeckel 10 im Fügebereich, welcher eine Grundblechstärke s1 von beispielsweise 1,4 mm aufweist. Gezeigt ist auch eine Ausnehmung 12, welche als Lochgeometrie ausgeformt ist und einen Lochkreisdurchmesser d aufweist. Die der Umformmatrize 52 zugewandte Lochkreiskante ist mit einer Fase versehen, welche im Schnitt einen Fasenwinkel γ einschließt und mit einem Tiefenmaß t in die Lochkreisinnenfläche einläuft. Auf der dem Halteelement 20 zugewandten Seite ist die Lochkreiskante mit einem Radius r abgerundet.

Die Umformmatrize 52 ist mit einer ebenen Stempelgegenfläche gezeigt, kann für verschiedene Anwendungen aber auch eine Vertiefung 52a aufweisen, welche gestrichelt dargestellt ist. Die Vertiefung 52a ist dann oberflächig mit einem Lochkreisdurchmesser n und einem Vertiefungsmaß m ausgebildet. Eine die Ausstülpung 21 überragender Bereich entspricht dann einer Abformung der Vertiefung 52a.

Der Umformstempel 51 weist zwei übereinander angeordnete sich aufweitende kegelstumpfförmige Abschnitte 51a, 51b auf, welche über eine Stufenabsatz 51c voneinander abgesetzt sind. Der erste kegelstumpfförmige Abschnitt 51a ist mit einem Öffnungswinkel β1 geöffnet und der zweite kegelstumpfförmige Abschnitt 51b ist mit einem Öffnungswinkel β2 geöffnet. Der Stufenabsatz 51c ist von der Auflage des Umformstempels 51 in einem Abstandsmaß L1 beabstandet. Die Außenkante der Auflage des Umformstempels 51 ist mit einem Radius R1 abgerundet. Vorteilhafte Abrundungen liegen von 0,1 mm - 1,0 mm, besonders bevorzugt von 0,1 mm - 0,5, beispielsweise 0,3 mm. Ebenso abgerundet ist der Stufenabsatz 51c über einen Radius R2 und einen Radius R3. Die kleinsten Querschnittsdurchmesser sind beim ersten und zweiten kegelstumpfförmigen Abschnitt jeweils als D1 und D2 bezeichnet.

Nachfolgend wird das Verfahren zur Ausbildung des Befestigungsbereiches 110 als Bauteilverbund 100 aus dem Gehäusedeckel 10 und dem Halteelement 20 beschrieben. Die Verbundsausbildung erfolgt durch Verbinden beider Bauteile 10, 20 mittels Durchsetzfügens mit den Verfahrensschritten:
- zuerst werden der Gehäusedeckel 10 und das Halteelement 20 in dem Fügebereich 15 in Überdeckung gebracht
- nachfolgend wird der Gehäusedeckel 10 im Bereich der Ausnehmung 12 in Anlagenkontakt mit der Umformmatrize 52 und das im Bereich der Ausnehmung angeordnete Halteelement 20 wird in Wirkverbindung mit dem Umformstempel 51 gebracht,
- nachfolgend wird der Umformstempel 51 in Richtung des Halteelementes 20 bewegt, wodurch festeres Material des Halteelementes 20 in die Ausnehmung 12 des Gehäusedeckels 10 verdrängt wird und eine vom Halteelement 20 abstehende Ausstülpung 21 ausgebildet wird, welche in die Ausnehmung 12 hineinragt und aufgrund der Kaltumformung durch Fließbewegungen des festeren Grundmaterials des Halteelementes 20 und des weicheren Grundmaterials des Gehäusedeckels 10 ein Kontaktbereich zwischen beiden Bauteilen 10, 20 mit einer Hinterschneidung 17 ausgebildet wird, welche einer Kraftbeaufschlagung auf den Fügebereich 15 einem Lösen des Halteelementes 20 und des Gehäusedeckels 10 entgegenwirkt. Die Ausstülpung 21 kann dabei eben mit der der Umformmatrize zugewandten Oberfläche des Gehäusedeckels 10 abschließen oder diese mit einem Absatzmaß überragen. Dies hängt von der Matrizenform ab, welche eben oder mit einer Vertiefung 52a vorliegt.

Grundsätzlich wird das zweite Bauteil 20 für die Umformung mit einem Niederhalterelement festgehalten, wodurch das zweite Bauteil 20 während des Eintauchens des Umformstempels 51 und während des Ausfahrens des Umformstempels 51 aus dem Umformbereich 16 in seiner Position gehalten wird. Das Niederhalteelement ist aus Übersichtsgründen in Fig. 3 nicht dargestellt, ist ansonsten zwischen dem zweiten Bauteil 20 und dem Umformstempel 51 angeordnet.

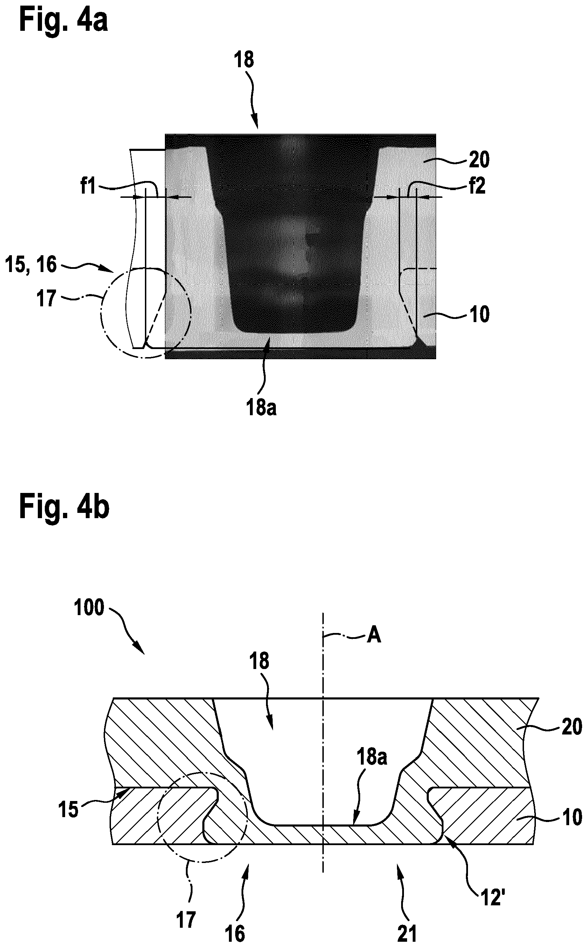

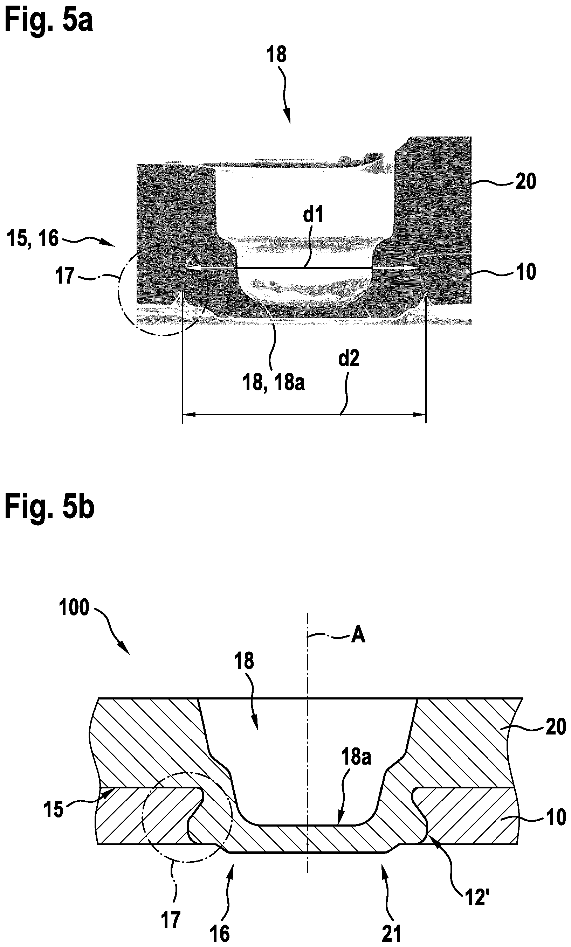

Die Fig. 4a und 5a zeigen im Ergebnis reale Schliffbilder ausgebildeter Umformbereiche 16 innerhalb eines Fügebereiches 15 des Gehäusedeckels 10 und des Halteelementes 20, welche durch ein erfindungsgemäßes Verfahren zu einem Bauteilverbund 100 verbunden sind. Die Fig. 4b und 5b zeigen die entsprechenden Umformbereiche 16 nochmals schematisch. Aufgrund der erfolgten Kaltumformung ist die ursprüngliche Lochgeometrie des Gehäusedeckels 10 der Ausbildung einer Hinterschneidung 17 gewichen. Grundsätzlich ist die nun auszumachende veränderte Ausnehmung 12' gegenüber der ursprünglichen Ausnehmung 12 vergrößert. Die Ausnehmung 12' und die Ausstülpung 21 sind idealerweise zu einer gemeinsamen Mittelachse A ausgerichtet, können aber auch einen kleinen tolerierbaren Versatz aufweisen, bei welchem die Hinterschneidung 17 weiterhin ausreichend ausgebildet bleibt. Die Hinterschneidung 17 ist in ihrer typischen Formausprägung derart ausgebildet, dass ein jeweiliger Querschnittsdurchmesser der Ausnehmung 12' und der Ausstülpung 21 senkrecht zur Mittelachse A über zumindest einen Abschnitt des zwischen ihnen vorliegenden Kontaktbereiches hinweg in einer zum Halteelement 20 abgewandten Richtung zunehmend vergrößert ist. In der Fig. 4a hat sich für die unten aufgeführte Variante 1 auf der linken dargestellten Seite ein Hinterschneidungsmaß f1 mit 358 µm und auf der rechten dargestellten Seite ein Hinterschneidungsmaß f2 mit 303 µm ausgebildet. In der Fig. 5a ist die Hinterschneidung 17 für die unten aufgeführte Variante 2 durch die Angabe eines kleinsten Lochkreisdurchmessers d1 der Ausnehmung 12' im Kontaktbereich mit 5,01 mm und eines größten Lochkreisdurchmessers d2 der Ausnehmung 12' mit 5,25 mm ersichtlich. Das Haltelement 20 weist im plastischen Umformbereich 16 eine Vertiefung 18 auf mit kreisförmigen Innenquerschnitten als Abdruck des zur Verformung des Materials in die Ausnehmung 12, 12' verwendeten Umformstempels 51. Die Vertiefung reicht dabei bis in die Ausnehmung 12' und bildet dadurch einen Bodengrund 18a der Ausstülpung 21 aus.

Die in Fig. 4a, 4b und Fig. 5a, 5b gezeigten Umformbereiche 16 unterscheiden sich aufgrund unterschiedlicher Konstellationen von genannten Geometriedaten der Lochgeometrie, des Umformstempels 51 und der Umformmatrize 52, wobei die Grundblechstärken s1, s2 des Gehäusedeckels 10 und des Halteelementes 20 für beide Varianten mit 1,4 mm und 2,5 mm gleich sind. Die betreffenden Geometriedaten der Variante 1 gemäß den Fig. 4a, 4b und der Variante 2 gemäß den Fig. 5a, 5b sind nachfolgend tabellarisch aufgezeigt.

### Variante 1:

| Geometriedaten Umformstempel [mm] bzw. [°] | | | | | | | |
|---|---|---|---|---|---|---|---|
| D1 | D2 | R1 | R2 | R3 | L1 | β1 | β2 |
| 2.9 | 3.6 | 0.2 | 0.4 | 0.2 | 2.4 | 5 | 8 |

| Geometriedaten Gehäusedeckel, Halteelement, Umformmatrize [mm] bzw. [°] | | | | | | | |
|---|---|---|---|---|---|---|---|
| s1 | s2 | d | r | t | γ | m | n |
| 1.4 | 2.5 | 4.0 | 0.3 | 0.6 | 80 | 0 | 0 |

### Variante 2:

| Geometriedaten Umformstempel [mm] bzw. [°] | | | | | | | |
|---|---|---|---|---|---|---|---|
| D1 | D2 | R1 | R2 | R3 | L1 | β1 | β2 |
| 2.8 | 3.9 | 0.8 | 0.4 | 0.2 | 1.8 | 10 | 10 |

| Geometriedaten Gehäusedeckel, Halteelement, Umformmatrize [mm] bzw. [°] | | | | | | | |
|---|---|---|---|---|---|---|---|
| s1 | s2 | d | r | t | γ | m | n |
| 1.4 | 2.5 | 4.5 | 0.2 | 0.6 | 60 | 0.3 | 5 |

Durch eine Analyse einer Vielzahl von verschiedensten Konstellationen von oben genannten Geometriedaten konnte eine Gleichung gefunden werden, durch welche eine Rissneigung bei der Verbundsausbildung, insbesondere im Bereich der dem zweiten Bauteil zugewandten Lochkreiskante, abgeschätzt werden kann. Im Wesentlichen ist dabei von einer reduzierten Rissneigung auszugehen, wenn die Gleichung erfüllt ist.

| | | | | | | | | |
|---|---|---|---|---|---|---|---|---|
| 0,8 | *Rp*0,2[20] | *d* | *D*1 | *r* | *R*1 | *L*1 | *D*2 | < 0 |
| | 341 | *s*2 ∗ 0,27 | | 0,378 | 2 | 2,07 | 1,16 | |

Rp0,2_{[20]} [MPa]:Streckgrenze des Grundmaterials des zweiten Bauteiles 20
- d [mm]:: Lochkreisdurchmesser der Lochgeometrie im ersten Bauteil vor einer Kaltumformung
- s2 [mm]:: Grundblechstärke des zweiten Bauteiles 20
- D1 [mm]:: der kleinste Querschnittsdurchmesser des kegelstumpfförmigen ersten Abschnittes am Umformstempel 51
- D2 [mm]:: der kleinste Querschnittsdurchmesser des kegelstumpfförmigen zweiten Abschnittes am Umformstempel 51
- r [mm]:: Abrundungsradius an der dem zweiten Bauteil 20 zugewandte Lochkreiskante der Ausnehmung 12 vor einer Kaltumformung
- R1 [mm]:: Abrundungsradius der Vorderkante der Stempelspitze
- L1 [mm]:: Stufenabsatz im Übergang des kegelstumpfförmigen ersten Abschnittes am Umformstempel 51 in den kegelstumpfförmigen zweiten Abschnitt am Umformstempel 51.

Neben der beispielhaften Ausführung eines Bauteilverbundes umfassend den Gehäusedeckel 10 und das Halteelement 20 können in anderen Anwendungen andere Anwendungselemente das erste und das zweite Bauteil 10, 20 bilden.

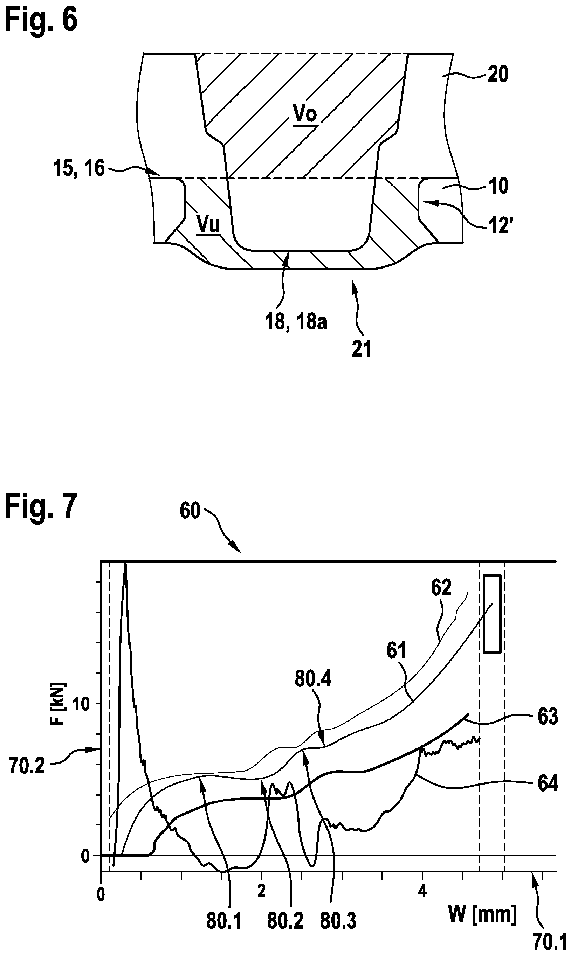

Grundsätzlich ist bei einer erstmaligen Festlegung von Grundblechstärken s1, s2 zweier zu verbindenden Bauteile 10, 20 zu berücksichtigen, dass seitens des zweiten Bauteiles 20 im Umformbereich 16 ein ausreichend großes Materialvolumen zu Verfügung gestellt werden kann, welches in die Ausnehmung 12 des ersten Bauteiles 10 mittels des Umformwerkzeuges 50 hineinverformt werden kann. Fig. 6 zeigt schematisch den Umformbereich 16 in einer Schnittdarstellung. Das vor einer Kaltumformung ursprünglich unverformte Materialvolumen Vo muss ausreichend groß sein, um ein nach einer Kaltumformung erforderliches Materialvolumen Vu zur Ausbildung der Ausstülpung 21 mit der Hinterschneidung 17 stellen zu können. Es zeigt sich aus eine Vielzahl von Umformversuchen, dass eine solche Forderung dann erfüllt ist, wenn zumindest die Bedingung gestellt wird, dass das oben verdrängte Volumen Vo zum unten vorhandenen freien Volumen Vu in einem Verhältnis Vu/Vo von 0,35 bis 0,8, insbesondere von 0,5 bis 0,75 steht.

In der Fig. 7 ist ein real aufgenommenes Kraft-Weg-Diagramm 60 bei der Ausbildung eines Bauteilverbundes 100 gemäß der Variante 2 gezeigt. Die waagerechte Achse 70.1 gibt hierbei den Verformungsweg W und die senkrechte Achse 70.2 die Umformkraft F während eines Kaltumformprozesses an. Gezeigt ist die gemessene Kraft-Weg-Kurve 61, welche in Abhängigkeit von Prozessphasen mehr oder weniger stark ansteigt. Zu Beginn ist der Kraftanstieg recht steil, bis der Umformstempel 51 so weit in das Halteelement 20 eingetaucht ist, dass die Streckgrenze überschritten ist (am Kurvenpunkt 80.1). Danach kann der Umformstempel 51 nahezu kraftneutral weiter eintauchen, bis der Stufenabsatz 51c am Umformstempel 51 ebenfalls in Anlagenkontakt mit dem bereits verformten Material des Halteelementes 20 kommt (am Kurvenpunkt 80.2). Dann wiederholt sich der anfängliche Kraftanstieg, bis auch unter Einwirkung des Stufenabsatzes 51.c das Material des Halteelementes 20 plastifiziert ist (am Kurvenpunkt 80.3). Im weiteren Umformprozess kommt die konisch verlaufende Stempelspitze der Lochkreisinnenfläche der Ausnehmung 12' des Gehäusedeckels 10 immer näher.

In der Folge nimmt die Materialstärke des Halteelementes 20 im Bereich der sich weiter ausbildenden Ausstülpung 21 durch starke Materialfließbewegungen ab und damit auch die erforderliche Kraft für ein weiteres Eintauchen des Umformstempels 51. Erst mit Anlagenkontakt an der Gegenfläche der Umformmatrize 52 steigt die Kraft wieder an (am Kurvenpunkt 80.4). Mit weiterer Umformung fließt dann das weiter verformende Material des Halteelementes 20 in den noch vorhandenen Rest der unterseitigen Fase an der Ausnehmung 12' des Gehäusedeckels 10 unter abschließender Ausbildung der Hinterschneidung 17. Dies ist insbesondere dann der Fall, wenn der Umformstempel 51 in seiner Umformbewegung soweit zugestellt ist, dass der Bodengrund 18a noch unterhalb des Tiefenmaßes t der in die Lochkreisinnenfläche der Ausnehmung 12' einlaufenden Fase ausgebildet ist, beispielsweise für die Varianten 1 und 2 mindestens 0,3 mm unterhalb. Die noch dargestellten Meßkurven 62, 62 sind prozessseitig festgelegte obere und untere zulässige Hüllgrenzkurven, zwischen welchen sich die gemessene Kraft-Weg-Kurve 61 befinden darf, um von einem fehlerfreien Prozessverlauf auszugehen. Darüber hinaus können noch weitere Mess- und/oder Prüfkurven 64 aufgenommen oder festgelegt sein.

Im vorliegenden Ausführungsbeispiel konnte der Bauteilverbund 100 mit einer Umformkraft F von kleiner als 20 KN ausgebildet werden. Rückschließend kann nur aufgrund der erfindungsgemäß erwirkten kleinen Umformkräfte F zwischen 10 - 30 KN, insbesondere zwischen 12 - 20 KN, ein Steuergerät 200 mit einem Befestigungsbereich 110 - wie in den Fig. 1 und 2 gezeigt - ausgebildet werden, weil in Folge die erforderliche Umformmatrize 52 derart klein dimensioniert werden kann, dass sie trotz sehr beengten Platzverhältnissen im Fügebereich 15 des auszubildenden Bauteilverbundes 100 innerhalb der vorliegenden Spaltöffnung S angeordnet werden kann.

## Patentansprüche

1. Bauteileverbund (100), hergestellt nach einem Verfahren nach einem der Ansprüche 12 oder 13, umfassend zumindest ein erstes und ein zweites Bauteil (10, 20), welche in einem Fügebereich (15) miteinander verbunden sind, wobei der Fügebereich (15) einen plastischen Umformbereich (16) aufweist mittels welchem das erste und das zweite Bauteil (10, 20) durch eine Kaltverformung mit einer zueinander gerichteten Haltekraft im Fügebereich (15) gehalten sind, wobei in dem plastischen Umformbereich (16) das erste Bauteil (10) eine Ausnehmung (12') aufweist und diese zumindest teilweise durch verformtes Material des zweiten Bauteils (20) ausgefüllt ist, wobei durch das verformte Material eine vom zweiten Bauteil (20) abstehende Ausstülpung (21) ausgebildet ist, welche in die Ausnehmung (12') hineinragt und einen Kontaktbereich zwischen dem ersten und dem zweiten Bauteil (10, 20) mit einer Hinterschneidung (17) ausbildet und diese bei einer Kraftbeaufschlagung auf den Fügebereich (15) einem Lösen der Bauteile (10, 20) entgegenwirkt, wobei
das Grundmaterial des die Ausnehmung (12') aufweisenden ersten Bauteils (10) eine geringere Streckgrenze aufweist als das Grundmaterial des die Ausnehmung (12') durch verformtes Material zumindest teilweise ausfüllenden zweiten Bauteils (20) und dass das erste und das zweite Bauteil (10, 20) zumindest in dem Fügebereich (15) als Blechteile oder blechartige Teile ausgebildet sind und eine Grundblechstärke (s2) des zweiten Bauteiles (20) größer ist als eine Grundblechstärke (s1) des ersten Bauteils (10), **dadurch gekennzeichnet, dass**
das zweite Bauteil (20) im plastischen Umformbereich (16) eine Vertiefung (18) mit kreisförmigen Innenquerschnitten als Abdruck eines zur Verformung des Materials in die Ausnehmung (12') verwendeten Umformstempels (51) aufweist und wobei die Vertiefung (18) bis in die Ausnehmung (12') reicht und einen Bodengrund (18a) der Ausstülpung (21) ausbildet und wobei vom Bodengrund (18a) aus von einem ersten sich aufweitenden kegelstumpfförmigen Abschnitt (51a) der Vertiefung (18) bis oberhalb der Ausnehmung (12') über einen Stufenabsatz (51c) ein zweiter sich aufweitender kegelförmiger Abschnitt (51b) der Vertiefung (18) ausgebildet ist.

2. Bauteileverbund (100) nach Anspruch 1,
**dadurch gekennzeichnet, dass**
die Streckgrenze des Grundmateriales des zweiten Bauteiles (20) 160 MPa - 250 MPa beträgt und die Streckgrenze des Grundmateriales des ersten Bauteiles (10) 120 MPa bis maximal der um 20 MPa verringerten Streckgrenze des zweiten Bauteiles (20) beträgt.

3. Bauteileverbund (100) nach einem der Ansprüche 1 oder 2,
**dadurch gekennzeichnet, dass**
die Grundblechstärke (s1) des ersten Bauteiles (10) 1,8 mm - 3,2 mm, bevorzugt 2,5 mm, und die Grundblechstärke (s2) des zweiten Bauteiles 1,0 mm - 1,8 mm, bevorzugt 1,4 mm, beträgt.

4. Bauteileverbund (100) nach einem der vorhergehenden Ansprüche,
**dadurch gekennzeichnet, dass**
das Grundmaterial des ersten Bauteiles (10) und des zweiten Bauteiles (20) ein Verhältnis ihrer jeweiligen Streckgrenze zu ihrer jeweiligen Zugfestigkeit von <=0,9 und eine jeweilige Bruchdehnung von >=8% aufweisen, wobei bevorzugt das Grundmaterial des ersten Bauteiles (10) aus AIMg3 und das Grundmaterial des zweiten Bauteils (20) aus ALMgSi0,5 ist.

5. Bauteileverbund (100) nach einem der vorhergehenden Ansprüche,
**dadurch gekennzeichnet, dass**
die Ausnehmung (12') und die Ausstülpung (21) zu einer gemeinsamen Mittelachse (A) ausgerichtet sind und die Ausnehmung (12') eine Rundlochgeometrie aufweist, wobei zur Ausbildung der Hinterschneidung (17) ein jeweiliger Querschnittsdurchmesser der Ausnehmung (12') und der Ausstülpung (21) senkrecht zur Mittelachse (A) über zumindest einen Abschnitt des Kontaktbereiches hinweg in einer zum zweiten Bauteil (20) abgewandten Richtung zunehmend vergrößert ist.

6. Bauteileverbund (100) nach einem der vorhergehenden Ansprüche,
**dadurch gekennzeichnet, dass**
der erste kegelstumpfförmige Abschnitt (51a) einen kleinsten Querschnittsdurchmesser (D1) von 2,2 mm -3,6 mm aufweist und der zweite kegelstumpfförmige Abschnitt (51b) einen kleinsten Querschnittsdurchmesser (D2) von 3,2 mm - 4,5 mm aufweist, wobei immer gilt, dass D2 > D1.

7. Bauteileverbund (100) nach einem der vorhergehenden Ansprüche,
**dadurch gekennzeichnet, dass**
der erste kegelstumpfförmige Abschnitt (51a) einen Öffnungswinkel ((31) von 1° - 20°, bevorzugt, 4° - 11°, und der zweite kegelstumpfförmige Abschnitt (51b) einen Öffnungswinkel ((32) von 1° - 20°, bevorzugt von 7° - 11°, aufweist.

8. Bauteileverbund (100) nach einem der vorhergehenden Ansprüche,
**dadurch gekennzeichnet, dass**
der Stufenabsatz (51c) 1,35 mm - 3 mm oberhalb des Bodengrundes (18a) der Ausstülpung (21) ausgebildet ist.

9. Bauteileverbund (100) nach einem der vorhergehenden Ansprüche,
**dadurch gekennzeichnet, dass**
die Ausnehmung (12') im ersten Bauteil (10) eine dem zweiten Bauteil (20) zugewandte Eintrittsquerschnittsfläche und eine dem zweiten Bauteil (20) abgewandte Austrittsquerschnittsfläche aufweist, wobei die Ausstülpung (21) eben mit der Austrittquerschnittsfläche abschließt oder diese bis zu 0,5 mm, bevorzugt um 0,3 mm, überragt.

10. Bauteileverbund (100) nach einem der vorhergehenden Ansprüche,
**dadurch gekennzeichnet, dass**
der die Austrittsquerschnittsfläche überragende Bereich der Ausstülpung (21) als Abdruck einer zur Verformung des Materials in die Ausnehmung (12') verwendeten Matrizenform (52) weitestgehend zylinderförmig und über einen Stufenabsatz zu einem mit der Austrittsquerschnittsfläche eben abschließenden Bereich der Ausstülpung (21) ausgebildet ist, wobei der überragende Bereich der Ausstülpung (21) zu Beginn des Stufenabsatzes einen Querschnittsdurchmesser (n) von 4,8 - 5,1 mm aufweist.

11. Steuergerät (200), umfassend einen Bauteilverbund (100) nach einem der vorhergehenden Ansprüche,
**dadurch gekennzeichnet, dass**
das erste Bauteil (10) ein Metallgehäuse des Steuergerätes (200) ist, insbesondere ein Blechgehäuse, ein Gehäuse als Tiefziehteil oder ein Gehäuse als Spritzgussteil, und das zweite Bauteil (20) ein mit dem Metallgehäuse verbundenes Halteelement (20) ist zur Befestigung des Steuergerätes (200) an einen ortfesten Halteort, insbesondere innerhalb eines Kraftfahrzeuges.

12. Verfahren zum Ausbilden eines Bauteilverbundes (100), insbesondere nach einem der Ansprüche 1 bis 10, durch Verbinden zumindest eines ersten und eines zweiten Bauteiles (10, 20) mittels Durchsetzfügen mit den Verfahrensschritten:
• das erste und das zweite Bauteil (10) werden in einem Fügebereich (15) in Überdeckung gebracht, wobei das erste Bauteil (10) eine Ausnehmung (12), insbesondere mit einer Lochgeometrie, aufweist und das Grundmaterial des ersten Bauteiles (10) eine geringere Streckgrenze aufweist als das Grundmaterial des zweiten Bauteiles (20), und eine Materialstärke des zweiten Bauteiles (20) zumindest im Fügebereich (15) größer ist als die Materialstärke des ersten Bauteiles (10) im Fügebereich (15),
• das erste Bauteil (10) wird im Bereich der Ausnehmung (12) in Anlagenkontakt mit einer Umformmatrize (52) eines Umformwerkzeuges (50) und das im Bereich der Ausnehmung (12) angeordnete zweite Bauteil (20) wird in Wirkverbindung mit einem Umformstempel (51) des Umformwerkzeuges (50) gebracht,
• der Umformstempel (51) wird in Richtung des zweiten Bauteiles (20) bewegt, wodurch festeres Material des zweiten Bauteiles (20) in die Ausnehmung (12) des weicheren ersten Bauteiles (10) verdrängt wird und eine vom zweiten Bauteil (20) abstehende Ausstülpung (21) ausgebildet wird, welche in die Ausnehmung (12, 12') hineinragt und aufgrund der Kaltumformung durch Fließbewegungen des festeren Grundmaterials des zweiten Bauteils (20) und des weicheren Grundmaterials des ersten Bauteils (10) ein Kontaktbereich zwischen dem ersten und dem zweiten Bauteil (10, 20) mit einer Hinterschneidung (17) ausgebildet wird, welche bei einer Kraftbeaufschlagung auf den Fügebereich (15) einem Lösen des ersten und des zweiten Bauteiles (10, 20) entgegenwirkt, **dadurch gekennzeichnet, dass** im zweiten Bauteil (20) im plastischen Umformbereich (16) eine Vertiefung (18) mit kreisförmigen Innenquerschnitten als Abdruck des zur Verformung des Materials in die Ausnehmung (12') verwendeten Umformstempels (51) ausgebildet wird und die Vertiefung (18) bis in die Ausnehmung (12') reicht und einen Bodengrund (18a) der Ausstülpung (21) ausgebildet wird und wobei vom Bodengrund (18a) aus von einem ersten sich aufweitenden kegelstumpfförmigen Abschnitt (51a) der Vertiefung (18) bis oberhalb der Ausnehmung (12') über einen Stufenabsatz (51c) ein zweiter sich aufweitender kegelförmiger Abschnitt (51b) der Vertiefung (18) ausgebildet wird.

13. Verfahren nach Anspruch 12,
**dadurch gekennzeichnet, dass**
das erste und das zweite Bauteil (10, 20) zumindest in dem Fügebereich (15) als Blechteile oder blechartige Teile ausgebildet sind und die Ausnehmung (12) eine Lochgeometrie aufweist, welche vor einer Kaltumformung durch das Umformwerkzeug (50) einen zylindrische Innenflächenabschnitt mit einem Lochkreisdurchmesser (d) von 3,2 - 5,5 mm umfasst und auf einer der Umformmatrize (52) zugewandten Blechaußenfläche des ersten Bauteiles (10) eine Anfasung ausgebildet ist, welche unter einem Winkel (γ) von 25° - 60° zur Mittelachse der Ausnehmung in einem Abstand (t) von 0,3 mm - 1,35 mm zur Blechaußenfläche auf den zylindrischen Innenflächenabschnitt ausläuft.

14. Verfahren nach einem der Ansprüche 12 oder 13,
**dadurch gekennzeichnet, dass**
der Bauteilverbund (100) mit einer Umformkraft (F) des Umformwerkzeuges (50) von zwischen 10 - 30 KN, insbesondere zwischen 12 - 20 KN, ausgebildet wird.

## Claims

1. Composite component (100), produced according to a method according to one of Claims 12 or 13, comprising at least one first and one second component (10, 20) which are connected to one another in a joining region (15), wherein the joining region (15) has a plastic forming region (16) by means of which the first and the second component (10, 20) by way of cold forming are held by a mutual holding force in the joining region (15); wherein in the plastic forming region (16) the first component (10) has a recess (12') and the latter is at least partially filled by deformed material of the second component (20); wherein configured by the deformed material is a protuberance (21) which projects from the second component (20) and protrudes into the recess (12') and configures a contact region between the first and the second component (10, 20) that has an undercut (17), the latter counteracting the release of the components (10, 20) when the joining region (15) is impinged with a force; wherein the base material of the first component (10), which has the recess (12'), has a lower yield point than the base material of the second component (20), which at least partially fills the recess (12') by deformed material, and that the first and the second component (10, 20) at least in the joining region (15) are configured as sheet-metal parts or sheet-metal-type parts, and a base sheet thickness (s2) of the second component (20) is greater than a base sheet thickness (s1) of the first component (10), **characterized in that**
the second component (20) in the plastic deformation region (16) as an imprint of a forming die (51) used for deforming the material into the recess (12') has a depression (18) having circular internal cross sections; and wherein the depression (18) reaches into the recess (12') and configures a base area (18a) of the protuberance (21); and wherein, proceeding from the base area (18a), a second flared conical portion (51b) of the depression (18), from a first flared frustoconical portion (51a) of the depression (18) across a shoulder (51c) to above the clearance (12'), is configured.

2. Composite component (100) according to Claim 1, **characterized in that**
the yield point of the base material of the second component (20) is 160 MPa to 250 MPa, and the yield point of the base material of the first component (10) is 120 MPa up to 20 MPa less than the yield point of the second component (20).

3. Composite component (100) according to one of Claims 1 or 2,
**characterized in that**
the base sheet thickness (s1) of the first component (10) is 1.8 mm to 3.2 mm, preferably 2.5 mm, and the base sheet thickness (s2) of the second component is 1.0 mm - 1.8 mm, preferably 1.4 mm.

4. Composite component (100) according to one of the preceding claims,
**characterized in that**
the base material of the first component (10) and that of the second component (20) have a ratio of <=0.9 between their respective yield points and their respective tensile strength and a respective elongation at breakage of >=8%, wherein the base material of the first component (10) is made of AlMg3, and the base material of the second component (20) is made of AlMgSi0.5.

5. Composite component (100) according to one of the preceding claims,
**characterized in that**
the recess (12') and the protuberance (21) co-aligned with a common central axis (A), and the recess (12') has a geometry of a round perforation, wherein for configuring the undercut (17) a respective cross-sectional diameter of the recess (12') and of the protuberance (21), measured perpendicularly to the central axis (A), in a direction facing away from the second component (20) is increasingly enlarged across at least one portion of the contact region.

6. Composite component (100) according to one of the preceding claims,
**characterized in that**
the first frustoconical portion (51a) has a smallest cross-sectional diameter (D1) of 2.2 mm to 3.6 mm, and the second frustoconical portion (51b) has a smallest cross-sectional diameter (D2) of 3.2 mm to 4.5 mm, where D2 > D1 always applies.

7. Composite component (100) according to one of the preceding claims,
**characterized in that**
the first frustoconical portion (51a) has an opening angle (β1) of 1° to 20°, preferably 4° to 11°, and the second frustoconical portion (51b) has an opening angle (β2) of 1° to 20°, preferably of 7° to 11°.

8. Composite component (100) according to one of the preceding claims,
**characterized in that**
the shoulder (51c) is configured so as to be 1.35 mm to 3 mm above the base area (18a) of the protuberance (21).

9. Composite component (100) according to one of the preceding claims,
**characterized in that**
the recess (12') in the first component (10) has a cross-sectional entry area that faces the second component (20), and a cross-sectional exit area (20) that faces away from the second component (20), wherein the protuberance (21) co-terminates with the cross-sectional exit area, or protrudes beyond the latter by up to 0.5 mm, preferably by 0.3 mm.

10. Composite component (100) according to one of the preceding claims,
**characterized in that**
the region of the protuberance (21) that protrudes beyond the cross-sectional exit area, as an imprint of the die plate mould (52) used for deforming the material into the recess (12'), is largely cylindrical and is configured across a shoulder towards a region of the protuberance (21) that co-terminates with the cross-sectional exit area, wherein the protruding region of the protuberance (21) at the beginning of the shoulder has a cross-sectional diameter (n) of 4.8 to 5.1 mm.

11. Control apparatus (200), comprising a composite component (100) according to one of the preceding claims,
**characterized in that**
the first component (10) is a metal housing of the control apparatus (200), in particular a sheet-metal housing, a housing as a deep-drawn part, or a housing an in injection-moulded part, and the second component (20) is a holding element (20) for fastening the control apparatus (200) to a locationally fixed holding position, in particular within a motor vehicle, which is connected to the metal housing.

12. Method for configuring a composite component (100), in particular according to one of Claims 1 to 10, by connecting at least one first and one second component (10, 20) by means of clinching, said method comprising the following method steps:
• the first and the second component (10) are brought to overlap in a joining region (15), wherein the first component (10) has a recess (12), in particular having a perforated geometry, and the base material of the first component (10) has a lower yield point than the base material of the second component (20), and a material thickness of the second component (20), at least in the joining region (15), is greater than the material thickness of the first component (10) in the joining region (15) ;
• the first component (10) in the region of the recess (12) is brought to bear on a forming die plate (52) of a forming tool (50), and the second component (20) disposed in the region of the recess (12) is operatively connected to a forming die (51) of the forming tool (50);
• the forming die (51) is moved in the direction of the second component (20), as a result of which firmer material of the second component (20) is displaced into the recess (12) of the softer first component (10) and a protuberance (21) which projects from the second component (20) is configured, said protuberance (21) protruding into the recess (12, 12') and, owing to the cold forming, a contact region having an undercut (17) between the first and the second component (10, 20) is configured as a result of the flowing motion of the firmer base material of the second component (20) and of the softer base material of the first component (10), said undercut (17) counteracting the release of the first and the second component (10, 20) when the joining region (15) is impinged with a force,
**characterized in that**
in the second component (20), as an imprint of the forming die (51) used for deforming the material into the recess (12'), a depression (18) having a circular internal cross section is configured in the plastic forming region (16), and the depression (18) reaches into the recess (12') and a base area (18a) of the protuberance (21) is configured; wherein, proceeding from the base area (18a), a second flared conical portion (51b) of the depression (18), from a first flared frustoconical portion (51a) of the depression (18) across a shoulder (51c) to above the clearance (12'), is configured.

13. Method according to Claim 12,
**characterized in that**
the first and the second component (10, 20), at least in the joining region (15), are configured as sheet-metal parts or sheet-metal-type parts, and the recess (12) has a perforated geometry which prior to cold forming by the forming tool (50) comprises a cylindrical internal area portion having a pitch circle diameter (d) of 3.2 to 5.5 mm, and a chamfer is configured on a sheet-metal external face of the first component (10) that faced the forming die plate (52), said chamfer tapering towards the cylindrical internal area portion at an angle (γ) of 25° to 60° in relation to the central axis of the recess and at a spacing (t) of 0.3 mm to 1.35 mm from the sheet-metal external face.

14. Method according to one of Claims 12 or 13,
**characterized in that**
the composite component (100) is configured using a forming force (F) of the forming tool (50) of between 10 and 30 kN, in particular between 12 and 20 kN.

## Revendications

1. Assemblage de pièces (100), fabriqué selon un procédé selon l'une des revendications 12 ou 13, comprenant au moins une première et une deuxième pièce (10, 20),
lesquelles sont reliées l'une à l'autre dans une région de jonction (15), la région de jonction (15) présentant une région de déformation plastique (16) au moyen de laquelle la première et la deuxième pièce (10, 20) sont retenues dans la région de jonction (15), par le biais d'une déformation à froid, par des forces de retenue orientées l'une vers l'autre, la première pièce (10) présentant un évidement (12') dans la région de déformation plastique (16) et celui-ci étant rempli au moins partiellement par la matière déformée de la deuxième pièce (20), une protubérance (21) faisant saillie à partir de la deuxième pièce (20) étant formée par la matière déformée, laquelle protubérance pénètre dans l'évidement (12') et forme une région de contact entre la première et la deuxième pièce (10, 20) avec une contre-dépouille (17) et celle-ci s'oppose à un détachement des pièces (10, 20) lorsque la région de jonction (15) est soumise à une force, dans lequel la matière de base de la première pièce (10) présentant l'évidement (12') présente une limite d'élasticité inférieure à celle de la matière de base de la deuxième pièce (20) remplissant au moins partiellement l'évidement (12') par la matière déformée et la première et la deuxième pièce (10, 20) sont formés en tant que pièces en tôle ou en tant que pièces de type tôle au moins dans la région de jonction (15) et une épaisseur de tôle de base (s2) de la deuxième pièce (20) est supérieure à une épaisseur de tôle de base (s1) de la première pièce (10), **caractérisé en ce que**
la deuxième pièce (20) présente, dans la région de déformation plastique (16), un renfoncement (18) doté de sections transversales intérieures circulaires en tant qu'empreinte d'un poinçon de déformation (51) utilisé pour la déformation de la matière dans l'évidement (12') et le renfoncement (18) parvenant jusque dans l'évidement (12') et formant une base de fond (18a) de la protubérance (21) et une deuxième section conique s'élargissant (51b) du renfoncement (18) étant formée à partir de la base de fond (18a) à partir d'une première section tronconique s'élargissant (51a) du renfoncement (18) jusqu'au-dessus de l'évidement (12') au-delà d'un épaulement étagé (51c).

2. Assemblage de pièces (100) selon la revendication 1,
**caractérisé en ce que**
la limite d'élasticité de la matière de base de la deuxième pièce (20) vaut de 160 MPa à 250 MPa et la limite d'élasticité de la matière de base de la première pièce (10) vaut de 120 MPa à au maximum la limite d'élasticité de la deuxième pièce (20) minorée de 20 MPa.

3. Assemblage de pièces (100) selon l'une des revendications 1 ou 2,
**caractérisé en ce que**
l'épaisseur de tôle de base (s1) de la première pièce (10) vaut de 1,8 mm à 3,2 mm, de préférence 2,5 mm, et l'épaisseur de tôle de base (s2) de la deuxième pièce vaut de 1,0 mm à 1,8 mm, de préférence 1,4 mm.

4. Assemblage de pièces (100) selon l'une des revendications précédentes,
**caractérisé en ce que**
la matière de base de la première pièce (10) et celle de la deuxième pièce (20) présentent un rapport de leur limite d'élasticité respective à leur résistance à la traction respective <=0,9 et un allongement à la rupture respectif >=8%, de préférence la matière de base de la première pièce (10) étant constituée de AlMg3 et la matière de base de la deuxième pièce (20) étant constituée de AlMgSi0,5.

5. Assemblage de pièces (100) selon l'une des revendications précédentes,
**caractérisé en ce que**
l'évidement (12') et la protubérance (21) sont orientés par rapport à un axe médian commun (A) et l'évidement (12') présente une géométrie de trou rond, un diamètre de section transversal respectif de l'évidement (12') et de la protubérance (21) perpendiculairement à l'axe médian (A) au-delà d'au moins une section de la région de contact étant accru de manière croissante dans une direction opposée à la deuxième pièce (20) pour la formation de la contre-dépouille (17).

6. Assemblage de pièces (100) selon l'une des revendications précédentes,
**caractérisé en ce que**
la première section tronconique (51a) présente un diamètre de section transversale le plus petit (D1) de 2,2 mm à 3,6 mm et la deuxième section tronconique (51b) présente un diamètre de section transversale le plus petit (D2) de 3,2 mm à 4,5 mm, où l'on a toujours D2 > D1.

7. Assemblage de pièces (100) selon l'une des revendications précédentes,
**caractérisé en ce que**
la première section tronconique (51a) présente un angle d'ouverture (β1) de 1° à 20°, de préférence de 4° à 11°, et la deuxième section tronconique (51b) présente un angle d'ouverture (β2) de 1° à 20°, de préférence de 7° à 11°.

8. Assemblage de pièces (100) selon l'une des revendications précédentes,
**caractérisé en ce que**
l'épaulement étagé (51c) est formé de 1,35 mm à 3 mm au-dessus de la base de fond (18a) de la protubérance (21).

9. Assemblage de pièces (100) selon l'une des revendications précédentes,
**caractérisé en ce que**
l'évidement (12') dans la première pièce (10) présente une surface de section transversale d'entrée tournée vers la deuxième pièce (20) et une surface de section transversale de sortie opposée à la deuxième pièce (20), la protubérance (21) se terminant de manière plane avec la surface de section transversale de sortie ou dépassant de celle-ci de jusqu'à 0,5 mm, de préférence de 0,3 mm.

10. Assemblage de pièces (100) selon l'une des revendications précédentes,
**caractérisé en ce que**
la région de la protubérance (21) dépassant de la surface de section transversale de sortie est formée, en tant qu'empreinte d'un moule de matrice (52) utilisé pour la déformation de la matière dans l'évidement (12'), dans une très large mesure de manière cylindrique et au-delà d'un épaulement étagé jusqu'à une région de la protubérance (21) se terminant de manière plane avec la surface de section transversale de sortie, la région en saillie de la protubérance (21) au début de l'épaulement étagé présentant un diamètre de section transversale (n) de 4,8 à 5,1 mm.

11. Appareil de commande (200), comprenant un assemblage de pièces (100) selon l'une des revendications précédentes,
**caractérisé en ce que**
la première pièce (10) est un boîtier métallique de l'appareil de commande (200), en particulier un boîtier en tôle, un boîtier sous forme de pièce d'emboutissage profond ou un boîtier sous forme de pièce moulée par injection, et la deuxième pièce (20) est un élément de retenue (20) relié au boîtier métallique et servant à la fixation de l'appareil de commande (200) en un emplacement de retenue fixé à demeure, en particulier à l'intérieur d'un véhicule automobile.

12. Procédé de formation d'un assemblage de pièces (100), en particulier selon l'une des revendications 1 à 10, par liaison d'au moins une première et une deuxième pièce (10, 20) par clinchage, présentant les étapes de procédé suivantes :
• la première et la deuxième pièce (10) sont amenées en recouvrement dans une région de jonction (15), la première pièce (10) présentant un évidement (12), en particulier avec une géométrie de trou, et la matière de base de la première pièce (10) présentant une limite d'élasticité inférieure à celle de la matière de base de la deuxième pièce (20), et une épaisseur de matière de la deuxième pièce (20) au moins dans la région de jonction (15) étant supérieure à l'épaisseur de matière de la première pièce (10) dans la région de jonction (15),
• la première pièce (10) est, dans la région de l'évidement (12), amenée en contact d'appui avec une matrice de déformation (52) d'un outil de déformation (50) et la deuxième pièce (20) disposée dans la région de l'évidement (12) est amenée en liaison fonctionnelle avec un poinçon de déformation (51) de l'outil de déformation (50),
• le poinçon de déformation (51) est déplacé en direction de la deuxième pièce (20), de telle sorte que la matière plus solide de la deuxième pièce (20) soit refoulée dans l'évidement (12) de la première pièce (10) plus souple et une protubérance (21) dépassant de la deuxième pièce (20) est formée, laquelle pénètre dans l'évidement (12, 12') et en raison de la déformation à froid par des déplacements d'écoulement de la matière de base plus solide de la deuxième pièce (20) et de la matière de base plus souple de la première pièce (10), une région de contact est formée entre la première et la deuxième pièce (10, 20) avec une contre-dépouille (17), laquelle s'oppose à un détachement de la première et de la deuxième pièce (10, 20) lorsque la région de jonction (15) est soumise à une force, **caractérisé en ce que** dans la deuxième pièce (20), dans la région de déformation plastique (16), un renfoncement (18) doté de sections transversales intérieures circulaires est formé en tant qu'empreinte du poinçon de déformation (51) utilisé pour la déformation de la matière dans l'évidement (12') et le renfoncement (18) parvient jusque dans l'évidement (12') et forme une base de fond (18a) de la protubérance (21) et une deuxième section conique s'élargissant (51b) du renfoncement (18) étant formée à partir de la base de fond (18a) à partir d'une première section tronconique s'élargissant (51a) du renfoncement (18) jusqu'au-dessus de l'évidement (12') au-delà d'un épaulement étagé (51c).

13. Procédé selon la revendication 12,
**caractérisé en ce que**
la première et la deuxième pièce (10, 20) sont formées au moins dans la région de jonction (15) en tant que pièces en tôle ou pièces de type tôle et l'évidement (12) présente une géométrie de trou, laquelle comprend, avant une déformation à froid au moyen de l'outil de déformation (50), une section de surface intérieure cylindrique présentant un diamètre de cercle de trou (d) de 3,2 à 5,5 mm et un biseautage est formé sur une surface extérieure de tôle, tournée vers la matrice de déformation (52), de la première pièce (10), lequel s'étend suivant un angle (γ) de 25° à 60° par rapport à l'axe médian de l'évidement à une distance (t) de 0,3 mm à 1,35 mm par rapport à la surface extérieure de tôle sur la section de surface intérieure cylindrique.

14. Procédé selon l'une des revendications 12 ou 13,
**caractérisé en ce que**
l'assemblage de pièces (100) est formé avec une force de déformation (F) de l'outil de déformation (50) comprise entre 10 et 30 kN, en particulier entre 12 et 20 kN.
